# FASCICULE DE BREVET EUROPEEN

(11) **EP 3 259 054 B1**
(45) Date de publication et mention de la délivrance du brevet: **26.08.2020**
(21) Numéro de dépôt: 16711328.1
(22) Date de dépôt: 17.02.2016
(51) Int. Cl.: B01J 13/08, F28D 20/02

(54) **MICROPARTICULES POLYMERIQUES**
POLYMERE MIKROPARTIKEL
POLYMERIC MICROPARTICLES

(30) Priorité: 18.02.2015 FR 1551348
(43) Date de publication de la demande: 27.12.2017
(73) Titulaire: COATEX, 69730 Genay (FR)
(72) Inventeur: CHAMPAGNE, Clémentine, 69300 Caluire-et-Cuire (FR); SUAU, Jean-Marc, 69480 Lucenay (FR)
(74) Mandataire: Balmefrezol, Ludovic Francis Pierre
(86) Numéro de dépôt international: PCT/FR2016/000025
(87) Numéro de publication internationale: WO 2016/132027

(56) Documents cités:
- US-A1- 2014 178 485

## Description

### DOMAINE DE L'INVENTION

La présente invention concerne le domaine technique de l'encapsulation, par exemple de l'encapsulation d'agents actifs, au moyen de copolymères acryliques de type HASE.

### ARRIERE PLAN DE L'INVENTION

Les techniques de micro-encapsulation sont de plus en plus développées et utilisées dans les domaines techniques variés (par exemple industrie pharmaceutique, cosmétique, textile, agroalimentaire, agrochimique, des détergents, de la peinture). De nombreuses méthodes d'encapsulation sont connues. Ainsi, il a été proposé d'encapsuler des agents actifs par polymérisation in-situ, par extraction de solvant ou encore par coacervation.
De telles techniques permettent d'encapsuler des agents actifs de nature chimique différente, par exemple hydrophiles ou hydrophobes, tels que des molécules odorantes, des principes actifs pharmaceutiques, des agents cosmétiques, des pigments photochromes ou photoluminescents, etc.
L'article d'Atterholt *et al* (1999) par exemple s'intéresse à l'encapsulation des phéromones des insectes pour le contrôle des populations des insectes et comme alternative à l'utilisation des insecticides. Le document décrit plusieurs systèmes d'encapsulation basés sur la présence de cire de paraffine et/ou d'une combinaison huile de soja/Vitamine E qui est présentée comme permettant de supprimer la volatilité des phéromones.
L'article de Delmas *et al.* (2012) s'intéresse également à l'encapsulation en utilisant de l'huile de soja, des cires ou un mélange des deux.
Il a également été proposé dans l'art antérieur d'encapsuler des agents actifs au moyen de polymères acryliques de type HASE.
Notamment, le document WO 2008/146119 (Coatex) décrit l'utilisation d'émulsions de type HASE, pour piéger des molécules odorantes en jouant sur le pH du mélange.
Egalement, le document WO 2014/96622 (Coatex) décrit l'utilisation d'un copolymère acrylique de type HASE et d'au moins un matériau à changement de phase solide-liquide présentant une température de transition de phase variant de 20 à 90°C pour préparer des microcapsules polymériques d'un agent actif, la présence d'un matériau à changement de phase permettant d'améliorer la résistance mécanique des microcapsules. Bien qu'étant adapté à un certain nombre de domaines d'applications, les microparticules obtenues selon les formules décrites dans ce dernier document présentent dans certaines autres applications l'inconvénient d'être trop dures, de se craqueler ou de manquer de souplesse. C'est notamment le cas lorsque les microparticules doivent tenir sur les surfaces sur lesquelles elles sont déposées, par exemple un textile ou une surface rugueuse. Par ailleurs, les microparticules de l'art antérieur ne permettent pas d'encapsuler certains principes actifs. US 2014/0178485 A1 décrit des microparticules à enveloppe polymérique, comprenant un copolymère acrylique de type HASE et un matériau à changement de phase solide-liquide présentant une température de transition de phase compris entre 35 et 70°C.

### BREVE DESCRIPTION DE L'INVENTION

La présente invention concerne des microparticules à enveloppe polymérique, ainsi que des dispersions aqueuses comprenant ces microparticules. Les microparticules à enveloppe polymérique comprennent :
a. au moins un copolymère acrylique de type HASE ;
b. au moins un matériau à changement de phase solide-liquide présentant une température de transition de phase Tf₁ variant de 35°C à 90°C ;
c. au moins un matériau à changement de phase solide-liquide présentant une température de transition de phase Tf₂ inférieure ou égale à 30°C ;
d. éventuellement au moins un agent actif.

Les microcapsules selon l'invention sont telles que définies par les revendications.

La présente invention concerne également l'utilisation de ces microparticules ou des dispersions aqueuses les comprenant pour libérer un agent actif en réponse à un changement de pH, un changement de température et/ou à des frictions et/ou au cours du temps.
La présente invention concerne également l'utilisation de ces microparticules ou des dispersions aqueuses les comprenant comme agent d'hydrophobisation des textiles ou pour la préparation de produits cosmétiques, agrochimiques, peintures, textiles, détergents, papiers.

La présente divulgation concerne également un procédé de préparation d'une dispersion aqueuse de microparticules, ainsi qu'un procédé de préparation de microparticules à enveloppe polymérique telles que décrites ci-dessus.

### DEFINITIONS

Dans la description de la présente invention, le terme « HASE » est un acronyme pour « Hydrophobically modified Alkali-soluble Emulsions ».
Dans la description de la présente invention, l'expression « copolymère acrylique de type HASE » désigne des copolymères linéaires ou réticulés, comprenant des groupements acides et des groupements hydrophobes. Les copolymères de type HASE résultent de la copolymérisation de monomères anioniques, tels que les acides (méth)acryliques, de monomères non ioniques hydrophobes et de macromonomères associatifs hydrophobes. A faible pH (typiquement inférieur à 5) et sans l'addition d'une base, le copolymère acrylique de type HASE est insoluble dans l'eau et est présent sous forme de dispersion aqueuse. Quand une base est ajoutée, les groupements anioniques sont neutralisés et le copolymère se solubilise dans l'eau.
Dans la description de la présente invention, l'expression « matériau à changement de phase solide-liquide présentant une température de transition de phase Tf₁ supérieure ou égale à 20°C » désigne un matériau qui a la capacité de changer d'état, de manière réversible, à une température Tf₁ supérieure à 20°C, par exemple comprise dans une plage de température variant de 20 à 90°C. Ce matériau à changement de phase entrant dans la composition des microparticules de la présente invention est solide à une température inférieure à sa température de transition de phase Tf₁ et liquide à une température supérieure à sa température de transition de phase Tf₁. Par « température de transition de phase Tf₁ » est désignée la température de fusion du matériau ou la température correspondant à la transition solide - liquide du matériau à changement de phase.
Dans la description de la présente invention, l'expression « matériau à changement de phase solide-liquide présentant une température de transition de phase Tf₂ inférieure ou égale à 30°C » désigne un matériau qui a la capacité de changer d'état, de manière réversible, à une température Tf₂ inférieure à 20°C. Ce matériau à changement de phase entrant dans la composition des microparticules de la présente invention est solide à une température inférieure à sa température de transition de phase Tf₂ et liquide à une température supérieure à sa température de transition de phase Tf₂. Par « température de transition de phase Tf₂ » est désignée la température de fusion du matériau ou la température correspondant à la transition solide - liquide du matériau à changement de phase.

Dans la présente invention, les matériaux à changement de phase entrant dans la composition des particules de la présente invention sont choisis au regard de l'utilisation ultérieure des particules.

Dans la description de la présente invention, le terme « agent actif » ou « principe actif » désigne tout composé présentant un intérêt à être encapsulé.
Dans la description de la présente invention, à moins qu'il n'en soit indiqué autrement, les pourcentages exprimés représentent des pourcentages en poids et sont exprimés par rapport au poids total de l'élément de référence. Par exemple, lorsqu'il est indiqué qu'un copolymère comprend 10 % d'un monomère, il est entendu que le copolymère comprend 10 % en poids de ce monomère par rapport au poids total de ce copolymère. Dans la description de la présente invention, l'expression « au moins un » désigne un ou plusieurs composés (par exemple : un ou plusieurs copolymères acryliques de type HASE, un ou plusieurs matériaux à changement de phase, un ou plusieurs agents actifs) tels qu'un mélange de 2 à 5 composés.
Dans la description de la présente invention, l'expression « microparticules » désignent des particules ayant une taille moyenne variant de 0,2 µm à quelques dizaines de micromètres, tels que de 0,2 à 100 µm, ou de 0,5 à 70 µm, ou de 1 à 40 µm. Lorsque les microparticules sont des particules sphériques, la taille moyenne des particules désigne le diamètre moyen des particules. Lorsque les particules ne sont pas sphériques, c'est-à-dire qu'elles présentent une plus longue dimension et une plus courte dimension, la taille moyenne des particules désigne la taille de la plus longue dimension des particules. La taille des particules peut être mesurée selon des méthodes bien connues de l'homme du métier, telles que par granulométrie laser.

Par « microparticules à enveloppe polymérique » ou « microparticules composites » ou « microcapsules », on entend des microparticules présentant une enveloppe externe constituée d'un copolymère selon l'invention et renfermant optionnellement un agent actif selon l'invention.

Dans la description de la présente invention, les lettres « n », « m » et « p » désignent des nombres entiers ou décimaux (dans ce cas ils représentent des valeurs moyennes). Dans la description de la présente invention, les bornes des gammes revendiquées sont incluses dans la portée de l'invention. Par exemple, si un groupe comprend entre 10 et 40 atomes de carbone, ledit groupe est susceptible de comprendre 10 ou 40 atomes de carbone.

### DESCRIPTION DETAILLEE DE L'INVENTION

Les microparticules à enveloppe polymérique de la présente invention se présentent sous la forme de structures plus ou moins sphériques capables de s'adapter ou d'adhérer au moins en partie aux surfaces qui les reçoivent (par exemple textile ou surface extérieure).
Les microparticules à enveloppe polymérique de la présente invention peuvent se présenter sous forme de dispersions aqueuses ou elles peuvent se présenter sous forme de microparticules solides, plus ou moins souples ou rigides en fonction des besoins de l'application.
Les microparticules de la présente invention présentent la particularité de comporter au moins deux types distincts de matériaux à changement de phase solide-liquide. Plus précisément, ces matériaux se différencient par leur température de transition de phase solide-liquide Tf. Utiliser deux types de matériaux à changement de phase comme constituants essentiels des microcapsules selon l'invention permet d'obtenir des microcapsules présentant des propriétés physiques différentes des microcapsules de l'art antérieur notamment celles décrites dans le document WO 2014/96622. Ces microcapsules peuvent notamment présenter un degré de souplesse qui les rend plus adaptées à un certain nombre d'applications.
Par ailleurs, les constituants de base de ces microcapsules permettent d'obtenir un système de microencapsulation plus flexible et modulable, qui s'adapte aux exigences de relargage attendu. Notamment, en choisissant de manière précise au moins deux matériaux à changement de phase (par exemple en fonction de leur température de transition de phase respective) et en fixant leurs quantités respectives au sein de la composition de microcapsules, on ajuste la température de relargage du principe actif en fonction des besoins de l'application.
On peut également moduler plus facilement la résistance au cisaillement des microparticules.

Par ailleurs, la combinaison des (au moins) deux matériaux à changement de phase présente l'avantage de permettre une meilleure solubilisation du principe actif, lorsque celui-ci est présent, au sein de la composition, et potentiellement un meilleur relargage.

Le système décrit dans la présente demande permet d'encapsuler une large gamme de principe actif et/ou d'augmenter la teneur en principe dans les microparticules.
Les microparticules à enveloppe polymérique de la présente invention comprennent :
a. au moins un copolymère acrylique de type HASE,
b. au moins un matériau à changement de phase solide-liquide présentant une température de transition de phase Tf₁ variant de 35°C à 90°C,
c. au moins un matériau à changement de phase solide-liquide présentant une température de transition de phase Tf₂ inférieure ou égale à 30°C, par exemple inférieure ou égale à 20°C, sous réserve que Tf₂ soit inférieure à Tf₁, et
d. éventuellement au moins un agent actif.

Les microcapsules selon l'invention sont telles que définies par les revendications.

### Copolymère acrylique de type HASE :

Les copolymères acryliques de type HASE forment l'enveloppe externe des microparticules de la présente invention.
Selon des modes de réalisation de l'invention, les copolymères acryliques de type HASE entrant dans la composition des microparticules de la présente invention comprennent les monomères suivants :
i. au moins un monomère anionique présentant une fonction vinylique polymérisable et un groupement carboxyle ;
ii. au moins un monomère hydrophobe non ionique présentant une fonction vinylique polymérisable ; et
iii. au moins un macromonomère associatif oxyalkylé présentant une fonction vinylique polymérisable et une chaîne hydrocarbonée hydrophobe.
Les monomères i. anioniques présentant une fonction vinylique polymérisable et un groupement carboxyle sont des monomères présentant une charge négative en solution aqueuse basique. Les monomères anioniques présentant une fonction vinylique polymérisable et un groupement carboxyle sont, par exemple, choisis parmi l'acide acrylique et/ou l'acide méthacrylique.

Les monomères ii. hydrophobes non ioniques présentant une fonction vinylique polymérisable sont des monomères présentant ni charge positive ni charge négative en solution aqueuse. Les monomères hydrophobes non ioniques présentant une fonction vinylique polymérisable sont, par exemple, choisis parmi les esters, les amides ou les nitriles des acides acryliques ou méthacryliques ou parmi l'acrylonitrile, l'acétate de vinyle, le styrène, le méthylstyrène, le diisobutylène, la vinylpyrrolidone ou la vinylcaprolactame. Tout particulièrement, les monomères hydrophobes non ioniques présentant une fonction vinylique polymérisable peuvent être choisis parmi les acrylates d'alkyle en C₁-C₈ ou les méthacrylates d'alkyle en C₁-C₈, tels que l'acrylate de méthyle, l'acrylate d'éthyle, l'acrylate de butyle, l'acrylate de 2-éthyle-hexyle, le méthacrylate de méthyle, le méthacrylate d'éthyle, le méthacrylate de butyle ou leurs mélanges. Plus particulièrement, les monomères hydrophobes non ioniques présentant une fonction vinylique polymérisable peuvent être choisis parmi l'acrylate d'éthyle, l'acrylate de butyle, le méthacrylate d'éthyle ou leurs mélanges.

Le macromonomère iii. associatif oxyalkylé présentant une fonction vinylique polymérisable et une chaîne hydrocarbonée hydrophobe peut présenter la formule (I) suivante :

(I) R - A - R'

dans laquelle :
- A représente une chaîne polymérique constituée de :
   - m motifs d'oxyde d'alkylène de formule -CH₂CHR₁O- avec R₁ représentant un groupement alkyle comprenant de 1 à 4 carbones, par exemple un groupement méthyle ou éthyle, et m variant de 0 à 150,
   - p motifs d'oxyde d'alkylène de formule -CH₂CHR₂O- avec R₂ représentant un groupement alkyle comprenant de 1 à 4 carbones, par exemple un groupement méthyle ou éthyle, et p allant de 0 à 150,
   - n motifs d'oxyde d'éthylène avec n variant de 0 à 150, ou de 10, ou 15, à 150, ou de 10, ou 15, à 100, ou de 15 à 50, ou de 15 à 30,
   dans laquelle m+n+p >4, ou m+n+p ≥5, et dans laquelle les motifs d'oxyde d'alkylène de formule -CH₂CHR₁O-, les motifs d'oxyde d'alkylène de formule -CH₂CHR₂O- et les motifs d'oxyde d'éthylène sont en bloc, alternés ou statistiques ;
- R représente un radical contenant une fonction insaturée polymérisable, appartenant au groupe des esters acrylique, méthacrylique, maléique, itaconique, ou crotonique ; et
- R' représente une chaîne hydrocarbonée linéaire, branchée ou ramifiée comprenant de 6 à 40 atomes de carbone, ou de 7 à 35 atomes de carbone ou de 8 à 22 atomes de carbone ou de 10 à 20 atomes de carbone (bornes incluses) ou un groupement cycloalkyle ou aryle substitué, ou non substitué, comprenant de 6 à 100 atomes de carbone ou de 6 à 60 atomes de carbone.

Les groupements R₁ et R₂ peuvent être identiques ou différents.

Dans des modes de réalisation particuliers, le macromonomère associatif oxyalkylé présentant une fonction vinylique polymérisable et une chaîne hydrocarbonée hydrophobe présente la formule (I) suivante :

(I) R - A - R'

dans laquelle R, R' et A sont tels que définis ci-dessus, avec n représentant un nombre de motifs d'oxyde d'éthylène variant de 15 à 150 ou de 15 à 50 ou de 15 à 30.

Dans des modes de réalisation particuliers, le macromonomère associatif oxyalkylé présentant une fonction vinylique polymérisable et une chaîne hydrocarbonée hydrophobe présente la formule (I) suivante :

(I) R - A - R'

dans laquelle R représente un radical contenant une fonction insaturée polymérisable appartenant au groupe des esters acryliques ou méthacryliques et A et R' sont tels que définis dans les modes de réalisation décrits ci-dessus.

Dans des modes de réalisation particuliers, le macromonomère associatif oxyalkylé présentant une fonction vinylique polymérisable et une chaîne hydrocarbonée hydrophobe présente la formule (I) suivante :

(I) R-A-R'

dans laquelle R' représente une chaîne hydrocarbonée linéaire, branchée ou ramifiée comprenant de 8 à 20 atomes de carbone ou de 8 à 16 atomes de carbone, de préférence une chaîne hydrocarbonée linéaire de 8 à 22 atomes de carbone (par exemple C8, C12, C16-18, C22), ou une chaîne ramifiée, ou branchée, de 12 à 20 atomes de carbone (par exemple C12, C16, C20), et A et R sont tels que définis dans les modes de réalisation décrits ci-dessus.

Dans des modes de réalisation particuliers, le macromonomère associatif oxyalkylé présentant une fonction vinylique polymérisable et une chaîne hydrocarbonée hydrophobe présente la formule (I) suivante :

(I) R - A - R'

dans laquelle A, R et R' sont tels que définis dans les modes de réalisation décrits ci-dessus, avec m et p représentant respectivement 0.

Dans des modes de réalisation particuliers, le macromonomère associatif oxyalkylé présentant une fonction vinylique polymérisable et une chaîne hydrocarbonée hydrophobe présente la formule (I) suivante :

(I) R-A-R'

dans laquelle :
- A est tel que défini dans les modes de réalisation décrits ci-dessus, avec m et p représentant respectivement 0 et n variant de 15 à 150 ou de 15 à 50 ou de 15 à 30 (ainsi A représente une chaîne polymérique constituée de 15 à 150 ou de 15 à 50 ou de 15 à 30 motifs d'oxyde d'éthylène) ;
- R représente un radical contenant une fonction insaturée polymérisable appartenant au groupe des esters acrylique, méthacrylique, maléique, itaconique, ou crotonique, de préférence appartenant au groupe des esters acryliques ou méthacryliques ; et
- R' représente une chaîne hydrocarbonée linéaire, branchée ou ramifiée comprenant de 6 à 40 atomes de carbone, ou de 7 à 35 atomes de carbone ou de 8 à 22 atomes de carbone.

Dans des modes de réalisation particuliers, le macromonomère associatif oxyalkylé présentant une fonction vinylique polymérisable et présentant une chaîne hydrocarbonée hydrophobe présente la formule (I) suivante :

(I) R-A-R'

dans laquelle :
- A est tel que défini dans les modes de réalisation décrits ci-dessus, avec m et p représentant respectivement 0 et n variant de 15 à 150 ou de 15 à 50 ou de 15 à 30 (ainsi A représente une chaîne polymérique constituée de 15 à 150 ou de 15 à 50 ou de 15 à 30 motifs d'oxyde d'éthylène) ;
- R représente un radical contenant une fonction insaturée polymérisable appartenant au groupe des esters acryliques ou méthacryliques ; et
- R' représente une chaîne hydrocarbonée linéaire, branchée ou ramifiée comprenant de 8 à 22 atomes de carbone, par exemple une chaîne hydrocarbonée linéaire de 8 à 22 atomes de carbone (par exemple C8, C12, C16-18, C22), ou une chaîne ramifiée, ou branchée, de 12 à 20 atomes de carbone (par exemple C12, C16, C20).

Dans des modes de réalisation particuliers, les copolymères acryliques entrant dans la composition des particules de la présente invention comprennent :
i. au moins un monomère anionique présentant une fonction vinylique polymérisable et un groupement carboxyle choisi parmi l'acide acrylique, l'acide méthacrylique ou leur mélange ;
ii. au moins un monomère hydrophobe non ionique présentant une fonction vinylique polymérisable choisi parmi l'acrylate d'éthyle, le méthacrylate de méthyle, l'acrylate de butyle ou leurs mélanges ; et
iii. au moins un macro monomère associatif oxyalkylé présentant une fonction vinylique polymérisable et présentant une chaîne hydrocarbonée de formule (I) suivante :

   (I) R - A - R'

   dans laquelle A, R et R' sont tels que définis dans les modes de réalisation décrits ci-dessus.

Dans des modes de réalisation particuliers, les copolymères acryliques entrant dans la composition des particules de la présente invention comprennent :
i. au moins un monomère anionique présentant une fonction vinylique polymérisable et un groupement carboxyle choisi parmi l'acide acrylique, l'acide méthacrylique ou leur mélange ;
ii. au moins un monomère hydrophobe non ionique présentant une fonction vinylique polymérisable choisi parmi l'acrylate d'éthyle, le méthacrylate de méthyle, l'acrylate de butyle ou leurs mélanges ;
iii. au moins un macromonomère associatif oxyalkylé présentant une fonction vinylique polymérisable et présentant une chaîne hydrocarbonée hydrophobe de formule (I) :

   (I) R-A-R'

   dans laquelle :
   - A est tel que défini dans les modes de réalisation décrits ci-dessus, avec m et p représentant respectivement 0 et n variant de 15 à 150 ou de 15 à 50 ou de 15 à 30 (ainsi A représente une chaîne polymérique constituée de 15 à 150 ou de 15 à 50 ou de 15 à 30 motifs d'oxyde d'éthylène) ;
   - R représente un radical contenant une fonction insaturée polymérisable, appartenant au groupe des esters acrylique, méthacrylique, maléique, itaconique, méthacryluréthane, vinyluréthane ou crotonique, de préférence au groupe des esters acryliques ou méthacryliques ;
   - R' représente une chaîne hydrocarbonée linéaire, branchée ou ramifiée comprenant de 8 à 22 atomes de carbone, par exemple une chaîne hydrocarbonée linéaire de 8 à 22 atomes de carbone (par exemple C8, C12, C16-18, C22), ou une chaîne ramifiée, ou branchée, de 12 à 20 atomes de carbone (par exemple C12, C16, C20).

Les copolymères acryliques entrant dans la composition des particules de la présente invention comprennent typiquement:
i. de 20 % à 65 % ou de 30 % à 45 % en poids d'au moins un monomère anionique présentant une fonction vinylique polymérisable et un groupement carboxyle ;
ii. de 35 % à 75 % ou de 45 % à 60 % en poids d'au moins un monomère hydrophobe non ionique présentant une fonction vinylique polymérisable ; et
iii. de 0,5 % à 15 % ou de 1 % à 13 % en poids d'au moins un macromonomère associatif oxyalkylé présentant une fonction vinylique polymérisable et une chaîne hydrocarbonée hydrophobe, plus particulièrement d'un macromonomère associatif oxyalkylé de formule (I) suivante :

   (I) R - A - R'

   dans laquelle A, R et R' sont tels que définis dans les modes de réalisation décrits ci-dessus.

Dans des modes de réalisation particuliers, les copolymères acryliques entrant dans la composition des particules de la présente invention comprennent :
i. de 20 % à 65 % ou de 30 % à 45 % en poids d'au moins un monomère anionique présentant une fonction vinylique polymérisable et un groupement carboxyle choisi parmi l'acide acrylique, l'acide méthacrylique ou leur mélange ;
ii. de 35 % à 75 % ou de 45 % à 60 % en poids d'au moins un monomère hydrophobe non ionique présentant une fonction vinylique polymérisable choisi parmi l'acrylate d'éthyle, le méthacrylate de méthyle, l'acrylate de butyle ou leurs mélanges ; et
iii. de 0,5 % à 15 % ou de 1 % à 13 % en poids d'au moins un macromonomère associatif oxyalkylé présentant une fonction vinylique polymérisable et présentant une chaîne hydrocarbonée hydrophobe de formule (I) :

   (I) R - A - R'

   dans laquelle :
   - A est tel que défini dans les modes de réalisation décrits ci-dessus, avec m et p représentant respectivement 0 et n variant de 15 à 150 ou de 15 à 50 ou de 15 à 30 (ainsi A représente une chaîne polymérique constituée de 15 à 150 ou de 15 à 50 ou de 15 à 30 motifs d'oxyde d'éthylène) ;
   - R représente un radical contenant une fonction insaturée polymérisable, appartenant au groupe des esters acrylique, méthacrylique, maléique, itaconique, méthacryluréthane, vinyluréthane ou crotonique, de préférence au groupe des esters acryliques ou méthacryliques ; et
   - R' une chaîne hydrocarbonée linéaire, branchée ou ramifiée comprenant de 8 à 22 atomes de carbone, par exemple une chaîne hydrocarbonée linéaire de 8 à 22 atomes de carbone (par exemple C8, C12, C16-18, C22), ou une chaîne ramifiée, ou branchée, de 12 à 20 atomes de carbone (par exemple C12, C16, C20).

Les copolymères acryliques de type HASE entrant dans la composition des particules de la présente invention résultent de la copolymérisation des monomères décrits ci-dessus. Ils peuvent être préparés selon les méthodes décrites dans les documents WO 2011/104599, WO 2011/104600 et EP 1778797.

Durant la polymérisation, un agent de transfert de chaînes peut être ajouté pour contrôler le poids moléculaire du copolymère. L'agent de transfert de chaîne peut être choisi parmi les mercaptans tels que l'éthyle mercaptan, n-propyl mercaptan, n-butyl mercaptan, isobutyl mercaptan, t-butyl mercaptan, n-amyl mercaptan, isoamyl mercaptan, t-amyl mercaptan, n-hexyl mercaptan, cyclohexyl mercaptan, n-octyl mercaptan, n-decyl mercaptan ou n-dodecyl mercaptan.

### Matériau à changement de phase présentant une température de transition de phase Tf₁

Les particules de la présente invention comprennent au moins un matériau à changement de phase solide-liquide présentant une température de transition de phase Tf₁ variant de 35°C à 90°C.

Les matériaux à changement de phase entrant dans la composition des particules de la présente invention peuvent être choisis parmi les cires d'origine naturelle ou synthétique. Les cires d'origine naturelle incluent les cires animales, les cires végétales et les cires minérales.
Les cires animales et végétales sont généralement constituées d'un mélange de lipides à longue chaîne hydrocarbonée, tels que les acides gras, les alcools gras ou les esters d'acide gras ou d'alcool gras, voire des éthers. Par « longues chaînes hydrocarbonées », on entend des chaînes hydrocarbonées présentant par exemple de 10 à 40 atomes de carbones. Les cires animales et végétales présentent typiquement une température de transition de phase variant de 25°C à 90°C. Des exemples de cires végétales incluent les cires de carnauba, de candelilla, de sucre de canne, d'Esparto ou le beurre de karité. Des exemples de cires animales incluent les cires d'abeille ou la lanoline.
Les cires minérales, incluant les cires paraffiniques (communément appelées paraffine), sont généralement constituées d'hydrocarbures saturés à chaîne linéaire comprenant par exemple de 20 à 40 atomes de carbone. Les cires minérales présentent typiquement une température de transition de phase allant de 25°C à 90°C. Des exemples de cire minérale incluent la cérésine, l'ozokerite, les cires de paraffine et les cires microcristallines. Des exemples de cires de paraffine incluent l'heneicosane dont la température de fusion est de 40,5°C, l'eicosane dont la température de fusion est de 36,1°C et la nonadecane dont la température de fusion est de 32,1°C.
Les cires d'origine synthétique sont généralement constituées de longues chaînes hydrocarbonées dépourvues de groupements fonctionnels. Des exemples de cires d'origine synthétique incluent les polymères à base de polyéthylène et les polymères à base de polyalkylène glycol, tels que les polymères à base de polyéthylène glycol et les polymères à base de polypropylène glycol.
On cite également les cires d'origine synthétique siliconées ou organosylilées.

### Matériau à changement de phase présentant une température de transition de phase Tf₂

Les particules de la présente invention comprennent au moins un matériau plastifiant. Selon un mode de réalisation, ce matériau à changement de phase solide-liquide présente une température de transition de phase Tf₂ inférieure ou égale à 30°C, sous réserve que cette température de transition de phase Tf₂ soit inférieure à la température de transition de phase Tf₁ de l'autre matériau à changement de phase présent dans les microparticules de l'invention. Par exemple, ce matériau à changement de phase a la capacité de changer d'état, de manière réversible, à une température inférieure ou égale à 25°C, par exemple ≤ à 20°C, ou à 18°C ou à 15°C.

Les matériaux à changement de phase entrant dans la composition des particules de la présente invention peuvent être choisis parmi les huiles polaires, les huiles apolaires ou leurs mélanges.

Dans la catégorie « huile apolaire », on cite notamment les huiles siliconés telles que les polydiméthylsiloxanes (PDMS), linéaires ou cycliques, liquides à température ambiante ; les polydiméthylsiloxanes comportant des groupements alkyle, alcoxy ou phényle, pendant et/ou en bout de chaîne siliconées, groupements ayant de 2 à 24 atomes de carbone, liquides à température ambiante ; les silicones phénylées comme les phényl triméthicones, les phényl diméthicones, les phényl triméthylsiloxy diphénylsiloxanes, des diphényl diméthicones, les diphényl méthyldiphényl trisiloxanes, les 2-phényléthyl triméthylsiloxysilicates, liquides ; les hydrocarbures ou fluorocarbures linéaires ou ramifiés d'origine synthétique ou minérale, liquides, comme les huiles de paraffine et leurs dérivés, la vaseline, les polydécènes, le polyisobutène hydrogéné, le squalane ; leurs mélanges.

Dans la catégorie « huile polaire », on cite notamment les huiles végétales, les huiles de synthèse, les esters et éthers de synthèse, les alcools gras, les acides gras et leurs mélanges.

Des exemples de ces huiles sont notamment :
- les huiles végétales hydrocarbonées à forte teneur en triglycérides constitués d'esters d'acides gras (en C8 à C24) et de glycérol dont les acides gras peuvent avoir des longueurs de chaînes variées, ces dernières pouvant être linéaires ou ramifiées, saturées ou insaturées ; ces huiles sont notamment les huiles de germe de blé, de maïs, de tournesol, de karité, de ricin, d'amandes douces, de lin, de macadamia, d'abricot, de soja, de colza, de coton, de luzerne, de pavot, de potimarron, de sésame, de courge, d'avocat, de noisette, de pépins de raisin ou de cassis, d'onagre, de millet, d'orge, de quinoa, d'olive, de seigle, de carthame, de bancoulier, de passiflore, de rosier muscat ;
- les alcools gras en C8 à C26 comme l'alcool oléique ;
- les acides gras ayant de 12 à 22 atomes de carbone comme l'acide oléique, linoléique ou linolénique ;
- leurs mélanges.

### Agent actif

Les microparticules de la présente invention comprennent au moins un agent actif. L'agent actif peut être choisi dans le groupe consistant en les parfums, les molécules odorantes, les arômes, les opacifiants, les agents hydratants, les agents adoucissants, les agents rafraîchissants, les colorants, les plastifiants, les agents amincissants, les principes actifs pharmaceutiques, les encres, les pigments, les principes actifs agrochimiques, les herbicides, les antiseptiques, les détergents, les enzymes, les anti-mousses, les agents de blanchiment, les azurants optiques, les biocides, les agents anti-UV, les agents anti-oxydants, les agents anti-corrosion, les fongicides et les agents antibactériens.
A titre indicatif de parfums et molécules odorantes, on cite les dérivés terpéniques tel que le limonène, le citronellal, le terpinéol et le menthol.
Dans certains modes de réalisation de la présente invention, l'agent actif est un parfum ou une molécule odorante.
Selon un mode de réalisation de la présente invention, l'agent actif n'est ni une phéromone ni un agent sémiochimique.

### Les microparticules de la présente invention

Les microparticules de la présente invention comprennent, par rapport au poids total des microparticules :
- de 1 à 20 %, ou de 1 à 15 % ou de 1 à 10 % en poids, d'au moins un copolymère acrylique de type HASE tel que décrit ci-dessus ;
- de 4 à 95 %, ou de 4 à 75 % ou de 4 à 50 %, en poids, d'au moins un matériau à changement de phase solide-liquide présentant une température de transition de phase Tf₁ variant de 35°C à 90°C tel que décrit ci-dessus;
- de 4 à 95 % en poids d'au moins un matériau à changement de phase solide-liquide présentant une température de transition de phase Tf₂ inférieure ou égale à 30°C, et
- de 4 à 95 %, ou de 24 à 95 % ou de 49 à 95 %, en poids d'au moins un agent actif tel que décrit ci-dessus.

Dans un autre mode de réalisation de la présente invention, le ratio massique entre le matériau à changement de phase solide-liquide présentant une température de transition de phase Tf₁ variant de 35°C à 90°C et le matériau à changement de phase solide-liquide présentant une température de transition de phase Tf₂ inférieure ou égale à 30°C est compris 1/10 et 10/1.
Les microparticules de la présente invention peuvent se présenter sous forme de dispersion aqueuse de particules ou elles peuvent se présenter sous forme solide, c'est-à-dire sous forme de granules (ou microcapsules) solides. Ainsi, la présente invention concerne des dispersions aqueuses comprenant des microparticules telles que décrites ci-dessus et des microparticules solides de composition telle que décrite ci-dessus.
Les dispersions aqueuses de microparticules peuvent comprendre de 1 à 70 % en poids de microparticules.
Les microparticules de la présente invention sont d'une composition telle qu'elles libèrent le contenu de l'enveloppe polymérique en réponse à un changement de pH, un changement de température et/ou sous l'action d'une friction et/ou sous l'action du temps.

Si ces microparticules ne contiennent pas d'agent actif, parce qu'elles sont par exemple destinées à l'hydrophobisation des textiles, le cisaillement (ou friction) de ces microparticules conduit à la déstructuration des particules. Celles-ci libèrent alors leur contenu à la surface du textile à traiter. Le contenu des microcapsules est dans ce cas choisi de manière à être par exemple majoritairement constitué de matériaux à changement de phase solide-liquide de nature grasse (mélange de type cire-huile).
Les microcapsules peuvent alternativement contenir au moins un agent actif. Dans ce cas, les microparticules de la présente invention sont telles qu'elles permettent de libérer l'agent actif encapsulé en réponse à un changement de pH, un changement de température et/ou un cisaillement/une friction.

Les microparticules de la présente invention présentent ainsi une résistance mécanique minimale, telle qu'elles maintiennent leur intégrité après avoir été préparées. On peut également ajuster la composition des microparticules pour augmenter la résistance au cisaillement. Ainsi, selon cet aspect, les microparticules de la présente invention sont dites « à résistance mécanique contrôlée ».

Les concentrations en copolymère acrylique de type HASE, en matériaux à changement de phase et/ou en agent actif peuvent être ajustées afin d'obtenir des microparticules plus ou moins souples/rigides ou pour ajuster leur résistance aux cisaillements.
Plus particulièrement, la quantité de matériau à changement de phase solide-liquide présentant une température de transition de phase Tf₂ inférieure ou égale à 30°C est choisie de manière à ce que les microcapsules qui les contiennent présentent une résistance mécanique qui peut être plus ou moins importante en fonction de l'effet de relargage recherché (rapide ou très retardé).

Les dispersions ou microparticules de la présente invention peuvent être utilisées dans le domaine de la cosmétologie, par exemple pour formuler des lotions, shampoings, crèmes, déodorants, compositions de maquillage, compositions de soin. On cite à cet égard en particulier l'encapsulation des parfums, huiles essentielles, opacifiants, agents hydratants, agents adoucissants, agents rafraîchissants, agents amincissants.

Les dispersions ou microparticules de la présente invention peuvent être utilisées dans le domaine de l'industrie textile, par exemple dans la fabrication de vêtements, collants, bas, gants. On cite à cet égard en particulier l'encapsulation des parfums, des agents amincissants, des agents anti-transpirants, des agents antibactériens. Les dispersions ou microparticules sont alors appliquées sur divers textiles.

Les dispersions ou microparticules de la présente invention peuvent être utilisées dans le domaine des peintures ou des colorants : des pigments ou des résines peuvent notamment être encapsulés.
Les microparticules de la présente invention peuvent être utilisées dans le domaine de l'industrie du papier (encapsulation d'encres, de molécules odorantes) ou de la fabrication des détergents (encapsulation d'agents odorants, anti-mousses, blanchissants).
Ainsi les microparticules solides ou dispersions aqueuses de microparticules de la présente invention peuvent être utilisées pour la préparation de produits cosmétiques, agrochimiques, détergents, peintures, textiles, papiers.

### Procédés de préparation de la dispersion de microparticules et des microparticules

Un objet de la présente divulgation concerne également un procédé de préparation d'une dispersion aqueuse de microparticules, ainsi qu'un procédé de préparation de microparticules à enveloppe polymérique telles que décrites ci-dessus. Les microparticules solides de la présente invention sont généralement produites à partir d'une dispersion aqueuse de microparticules.
Les dispersions aqueuses de microparticules peuvent être préparées par un procédé comprenant les étapes suivantes :
a) préparation d'une solution aqueuse comprenant :
   - au moins un copolymère acrylique de type HASE solubilisé dans ladite solution aqueuse au moyen d'une base ;
   - au moins un matériau à changement de phase solide-liquide présentant une température de transition de phase Tf₁ supérieure ou égale à 20°C, ledit matériau à changement de phase solide-liquide étant présent, ou ayant été introduit, dans la solution aqueuse à une température supérieure à sa température de transition de phase Tf₁ ;
   - au moins un matériau à changement de phase solide-liquide présentant une température de transition de phase Tf₂ inférieure ou égale à 30°C, par exemple inférieure ou égale à 20°C ; et
   - éventuellement au moins un agent actif ; et
b) coacervation du polymère acrylique de type HASE pour conduire auxdites dispersions aqueuses de microparticules.

Lorsque le matériau à changement de phase solide-liquide est dit « présent dans la solution aqueuse à une température supérieure à sa température de transition de phase Tf₁ », il est entendu que l'ensemble des constituants dans la solution aqueuse est à une température supérieure à la température de transition de phase du matériau à changement de phase.

Lorsque le matériau à changement de phase solide-liquide est dit « ayant été introduit dans la solution aqueuse à une température supérieure à sa température de transition de phase Tf₁ », il est entendu que le matériau a été ajouté à une température supérieure à sa température de transition de phase Tf₁ mais que l'eau, la base, le copolymère de type HASE, l'agent actif peuvent être à une température inférieure à cette température de transition de phase Tf₁. La solution aqueuse finale comprenant le copolymère acrylique de type HASE, la base, l'agent actif et les deux matériaux à changement de phase a ainsi généralement une température inférieure à la température de transition de phase Tf₁.

En général, le matériau à changement de phase solide-liquide présentant une température de transition de phase Tf₁ supérieure ou égale à 20°C, seul ou en mélange avec l'agent actif et le deuxième matériau à changement de phase (présentant une température de transition de phase Tf₂ inférieure ou égale à 30°C), est chauffé à une température supérieure à sa température de transition de phase Tf₁ et introduit à une température supérieure à sa température de transition de phase Tf₁ dans une solution aqueuse comprenant les autres constituants des microcapsules, cette solution aqueuse ayant généralement une température inférieure à la température de transition de phase Tf₁ du matériau à changement de phase.

Dans l'étape a), la base est ajoutée en une quantité permettant de solubiliser le copolymère acrylique de type HASE dans la solution aqueuse.

La base employée dans le procédé est typiquement une base organique ou minérale. La base peut par exemple être choisie parmi l'hydroxyde de sodium, l'ammoniac, l'hydroxyde de potassium et le 2-amino-2-méthyl-1-propanol.
Les articles de Jenkins et al., 2002 (J. Phys. Chem. B 2002, 106, 1195-1204 1195) et Horiuchi et al., 1998 (Can. J. Chem. 76: 1779-1787) décrivent le phénomène de solubilisation des polymères HASE lors de l'ajout d'une base.

Selon des modes de réalisation de l'invention, la quantité de base utilisée pour solubiliser le copolymère est telle que le pH de la solution aqueuse est supérieur ou égal à 6,5, ou supérieur ou égal à 7, ou supérieur ou égal à 7,5.

Selon d'autres modes de réalisation de l'invention, en fonction du type de base utilisée, notamment si la base utilisée est la soude, la quantité de base utilisée pour solubiliser le copolymère est telle que le rapport molaire (nOH⁻/nCOOH) entre le nombre de groupements hydroxyles apportés par la base (nOH⁻) et le nombre de groupements carboxyles portés par le copolymère acrylique de type HASE (nCOOH) soit supérieur à 0,3, ou supérieur à 0,4, ou supérieur à 0,45 et de préférence inférieur à 1,2. Le nombre de groupements carboxyles portés par le copolymère acrylique de type HASE peut être déterminé par des méthodes connues de l'homme du métier, telles que par titration.

Selon des modes de réalisation de l'invention, on prépare la solution aqueuse de l'étape a) sous agitation.
L'étape de coacervation du polymère acrylique de type HASE conduisant aux dispersions aqueuses de microparticules (étape b)) est réalisée une fois que la solution aqueuse est à une température inférieure à la température de transition de phase du matériau à changement de phase Tf₁, c'est-à-dire après refroidissement de la solution aqueuse.

La coacervation peut être réalisée par addition de sels, tels que des chlorures de sodium, ou alternativement par addition d'un acide.

Dans certaines modes de réalisation de l'étape b) du procédé, la coacervation est réalisée par ajout d'un acide. L'acide employé dans le procédé peut notamment être choisi parmi un acide organique ou minéral. Plus particulièrement, l'acide peut être choisi parmi l'acide phosphorique, l'acide chlorhydrique, l'acide acétique, l'acide citrique, l'acide D-gluconique, l'acide glutamique et l'acide ascorbique.

Dans certaines modes de réalisation de l'étape b) du procédé, la quantité d'acide utilisée pour réaliser la coacervation est telle que le pH de la dispersion est inférieur ou égal à 6,5 ou inférieur ou égal à 6,3.

Dans d'autres modes de réalisation de l'étape b) du procédé, en fonction du type d'acide utilisé, notamment si l'acide utilisé est l'acide acétique, la quantité d'acide ajoutée est telle que le rapport molaire (nH₃O⁺/nCOOH) entre le nombre de protons apportés par l'acide (nH₃O⁺) et le nombre de groupements carboxyles portés par le copolymère acrylique de type HASE (nCOOH) est supérieur à 0,1, ou supérieur à 0,15, ou supérieur à 0,2 et inférieur à 1.

Selon des modes de réalisation de l'invention, l'ajout de sel ou d'acide est réalisé sous agitation.

La coacervation (ou précipitation) du polymère acrylique de type HASE permet de former une enveloppe polymérique qui constitue l'enveloppe externe des microparticules.

Dans certains modes de réalisation, la solution aqueuse comprenant le copolymère acrylique de type HASE solubilisé, l'agent actif et le matériau à changement de phase solide-liquide (étape a)) est préparée selon les étapes suivantes :
a1) préparation d'une solution aqueuse comprenant le copolymère acrylique de type HASE solubilisé au moyen d'une base ;
a2) préparation d'un mélange comprenant l'agent actif et le matériau à changement de phase, ledit mélange étant préparé à une température supérieure à la température de transition de phase du matériau à changement de phase ou étant ensuite chauffé à une température supérieure à la température de transition de phase du matériau à changement de phase ; et
a3) introduction du mélange, par exemple sous agitation, obtenu à l'étape a2) dans la solution aqueuse obtenue à l'étape a1).

On note que selon ces modes de réalisation, lors de l'étape a3) :
- le mélange obtenu à l'étape a2) se trouve à une température supérieure à la température de transition de phase du matériau à changement de phase, par exemple à une température comprise entre la température de transition de phase du matériau à changement de phase et la température de chauffe du mélange a2) ;
- la solution aqueuse obtenue à l'étape a1) se trouve à une température inférieure à la température de transition de phase du matériau à changement de phase.

Selon des modes de réalisation de l'invention, l'introduction du mélange obtenu à l'étape a2) dans la solution aqueuse obtenue à l'étape a1) est réalisée sous agitation.

Dans d'autres modes de réalisation, la solution aqueuse comprenant le copolymère acrylique de type HASE solubilisé, l'agent actif et le matériau à changement de phase solide-liquide (étape a) peut être préparée selon les étapes suivantes :
a1) préparation d'une solution aqueuse comprenant le copolymère acrylique de type HASE solubilisé au moyen d'une base, au moins un agent actif et au moins un matériau à changement de phase ; et
a2) chauffage de la solution aqueuse obtenue à l'étape a1) à une température supérieure à la température de transition du matériau à changement de phase.
Selon des modes de réalisation de l'invention, la solution aqueuse est préparée (étape a1)) sous agitation ou elle est agitée après avoir été préparée. Dans ce cas, elle peut être agitée avant, pendant ou après chauffage (étape a2)), mais avant de réaliser l'étape b). Selon ces modes de réalisation, l'ordre d'introduction du copolymère acrylique de type HASE, de la base, de l'agent actif et du matériau à changement de phase pour conduire à la solution aqueuse de l'étape a1) est indifférent.
Ainsi, le copolymère acrylique de type HASE, l'eau et la base peuvent être mélangés ensemble dans un premier temps. A ce mélange, peut être ajouté un second mélange comprenant le matériau à changement de phase et l'agent actif, de manière à obtenir la solution aqueuse de l'étape a1).
De manière alternative, le copolymère acrylique de type HASE, l'eau, la base, le matériau à changement de phase et l'agent actif peuvent être mélangés ensemble, sans étape préliminaire de sous-mélange, pour donner la solution aqueuse de l'étape a1).

Ainsi, selon la présente divulgation, les dispersions aqueuses de particules peuvent être préparées par un procédé comprenant les étapes suivantes :
a1) préparation d'une solution aqueuse comprenant une base et au moins un copolymère acrylique de type HASE, plus particulièrement un copolymère acrylique de type HASE tel que décrit ci-dessus ;
a2) préparation d'un mélange comprenant au moins un agent actif et au moins les deux matériaux à changement de phase, ledit mélange étant préparé à une température supérieure à la température de transition de phase Tf₁ du matériau à changement de phase (dont la température de transition de phase Tf₁ est supérieure ou égale à 20°C) ;
a3) introduction du mélange obtenu à l'étape a2) dans la solution aqueuse obtenue à l'étape a1) ; et
b) coacervation du copolymère acrylique de type HASE pour conduire aux dispersions aqueuses de particules.

De manière alternative, les dispersions aqueuses de particules de la présente divulgation peuvent être préparées par un procédé comprenant les étapes suivantes :
a1) préparation d'une solution aqueuse comprenant une base, au moins un agent actif, au moins les deux matériaux à changement de phase et au moins un copolymère acrylique de type HASE, plus particulièrement un copolymère acrylique de type HASE tel que décrit ci-dessus ;
a2) chauffage de la solution aqueuse obtenue à l'étape a1) à une température supérieure à la température Tf₁ du matériau à changement de phase (dont la température de transition de phase Tf₁ est supérieure ou égale à 20°C) ; et
b) coacervation du copolymère acrylique de type HASE pour conduire aux dispersions aqueuses de particules.

Des microparticules solides peuvent être obtenues après séchage des dispersions de microparticules obtenues à l'étape b).

Le copolymère acrylique de type HASE, les matériaux à changement de phase et l'agent actif employés dans les procédés de la présente invention peuvent être tels que décrits dans la description de la présente invention.
Les procédés mis en œuvre pour la préparation des microparticules de la présente invention sont respectueux de l'environnement puisqu'il n'est pas fait usage de solvant organique.

### Utilisation de la dispersion ou des microparticules

Un objet de la présente invention concerne également l'utilisation de microparticules selon l'invention ou de dispersions aqueuses de microparticules selon l'invention pour la préparation de produits cosmétiques, agrochimiques, peintures, textiles, détergents, papiers.
Un autre objet de la présente invention concerne l'utilisation de microparticules selon l'invention ou de dispersions aqueuses de microparticules selon l'invention, pour l'hydrophobisation des textiles.
Un autre objet encore de la présente invention concerne l'utilisation de microparticules selon l'invention ou de dispersions aqueuses de microparticules selon l'invention, pour libérer un agent actif en réponse à un changement de pH, un changement de température et/ou à des frictions et/ou dans le temps.
La présente invention concerne également un agent d'hydrophobisation des textiles consistant en des microparticules selon l'invention ou de dispersions aqueuses de microparticules selon l'invention.

### EXEMPLES

### EXEMPLE 1

Cet exemple illustre la préparation d'une dispersion de microparticules selon l'invention sans principe actif.

### Préparation du copolymère acrylique HASE

Le copolymère acrylique selon l'invention est préparé selon des méthodes connues de l'homme du métier au moyen d'un agent de transfert de chaînes du type mercaptan.

Ce copolymère est constitué de :
35,5 % en poids d'acide méthacrylique,
52,4 % en poids d'acrylate d'éthyle,
12,0 % en poids d'un macromonomère de formule (I) dans laquelle :
   - m et p = 0,
   - n = 30,
   - R représente un ester méthacrylique,
   - R' représente une chaîne hydrocarbonée branchée comprenant 12 atomes de carbone.

### Essai 1-1 : Préparation d'une dispersion de microparticules selon la présente invention

### Préparation d'une solution aqueuse

7,5 g du copolymère HASE (polymérisé à 30,8 % dans l'eau), sont solubilisés dans 59,25 g d'eau en présence de 3,8 g de soude à 10 % par agitation dans un agitateur mécanique à une température de 40°C.
15,75 g de paraffine commercialisée par la société Sigma-Aldrich sous la référence Paraffin wax 327204 (Tf₁ = 53-57°C) sont mélangés avec 47,25 g d'huile de tournesol du commerce (Tf₂ < 0°C). Le mélange est agité et chauffé à une température d'environ 90°C.
A l'aide d'une pompe péristaltique, le mélange liquide paraffine-huile de tournesol (à une température comprise entre Tf₁ et 80°C) est introduit dans la solution aqueuse de copolymère HASE.

### Coacervation

6,44 g d'une solution de H₃PO₄ à 4 % sont ajoutés à la solution aqueuse de copolymère HASE à laquelle a été ajouté le mélange paraffine-huile de tournesol. On obtient une dispersion de couleur blanche de pH 6,2, dont le diamètre des particules D50% = 5,3 µm.

### Essai 1-2 : Préparation d'une dispersion de microparticules hors invention

### Préparation d'une solution aqueuse

15 g du copolymère HASE (polymérisé à 30,8 % dans l'eau), sont solubilisés dans 118 g d'eau en présence de 7,62 g de soude à 10 % par agitation dans un agitateur mécanique à une température de 40°C.

126 g de paraffine commercialisée par la société Sigma-Aldrich sous la référence Paraffin wax 327204 (Tf₁ = 53-57°C) sont agités et chauffés à une température d'environ 90°C.
A l'aide d'une pompe péristaltique, la paraffine liquide (à une température comprise entre Tf₁ et 80°C) est introduite dans la solution aqueuse de copolymère HASE.

### Coacervation

12,88 g d'une solution de H₃PO₄ à 4 % sont ajoutés à la solution aqueuse de copolymère HASE à laquelle a été ajoutée la paraffine. Dans ces conditions, on obtient des grumeaux ; il n'est pas possible d'obtenir une dispersion de microparticules comme à l'essai 1-1.

### EXEMPLE 2

Cet exemple illustre la préparation de deux dispersions de microparticules selon l'invention sans principe actif.

### Préparation du copolymère acrylique HASE

Le copolymère acrylique selon l'invention est préparé selon des méthodes connues de l'homme du métier au moyen d'un agent de transfert de chaînes du type mercaptan.
Ce copolymère est constitué de :
35,5 % en poids d'acide méthacrylique,
52,4 % en poids d'acrylate d'éthyle,
12,0 % en poids d'un macromonomère de formule (I) dans laquelle :
   - m et p = 0,
   - n = 30,
   - R représente un ester méthacrylique,
   - R' représente une chaîne hydrocarbonée branchée comprenant 12 atomes de carbone.

### Essai 2-1 : Préparation d'une dispersion de microparticules selon la présente invention

### Préparation d'une solution aqueuse

7,5 g du copolymère HASE (polymérisé à 30,8 % dans l'eau), sont solubilisés dans 59,25 g d'eau en présence de 3,8 g de soude à 10 % par agitation dans un agitateur mécanique à une température de 40°C.

15,75 g de cire d'abeille commercialisée par la société Sigma-Aldrich (Tf₁ = 61-65°C) sont mélangés avec 47,25 g d'huile de tournesol du commerce. Le mélange est agité et chauffé à une température d'environ 80°C.
A l'aide d'une pompe péristaltique, ce mélange ternaire liquide (à une température comprise entre Tf₁ et 80°C) est introduit dans la solution aqueuse de copolymère HASE.

### Coacervation

6,44 g d'une solution de H₃PO₄ à 4 % sont ajoutés à la solution aqueuse de copolymère HASE à laquelle a été ajouté le mélange ternaire liquide. On obtient une dispersion de couleur blanche.

### Essai 2-2 : Préparation d'une dispersion de microparticules selon la présente invention

### Préparation d'une solution aqueuse

7,5 g du copolymère HASE (polymérisé à 30,8 % dans l'eau), sont solubilisés dans 59,25 g d'eau en présence de 3,8 g de soude à 10 % par agitation dans un agitateur mécanique à une température de 40°C.
15,75 g de cire d'abeille siliconée commercialisée par la société Koster Keunen (Tf₁ = 75°C) sont mélangés avec 47,25 g d'huile de silicone commercialisée par la société VWR (Tf₂ < 0°C). Le mélange est agité et chauffé à une température d'environ 90°C.
A l'aide d'une pompe péristaltique, ce mélange ternaire liquide (à une température comprise entre Tf₁ et 80°C) est introduit dans la solution aqueuse de copolymère HASE.

### Coacervation

6,44 g d'une solution de H₃PO₄ à 4 % sont ajoutés à la solution aqueuse de copolymère HASE à laquelle a été ajouté le mélange ternaire liquide. On obtient une dispersion de couleur blanche.

### EXEMPLE 3

Cet exemple illustre la préparation de deux dispersions de microparticules selon l'invention avec comme principe actif du terpinéol.

### Préparation du copolymère acrylique HASE

Le copolymère acrylique selon l'invention est préparé selon des méthodes connues de l'homme du métier au moyen d'un agent de transfert de chaînes du type mercaptan.

Ce copolymère est constitué de :
35,5 % en poids d'acide méthacrylique,
52,4 % en poids d'acrylate d'éthyle,
12,0 % en poids d'un macromonomère de formule (I) dans laquelle :
   - m et p = 0,
   - n = 30,
   - R représente un ester méthacrylique,
   - R' représente une chaîne hydrocarbonée branchée comprenant 12 atomes de carbone.

### Essai 3-1 : Préparation d'une dispersion de microparticules selon la présente invention

### Préparation d'une solution aqueuse

7,5 g du copolymère HASE (polymérisé à 30,8 % dans l'eau), sont solubilisés dans 59,25 g d'eau en présence de 3,8 g de soude à 10 % par agitation dans un agitateur mécanique à une température de 40°C.
7,88 g de paraffine commercialisée par la société Sigma-Aldrich (Tf₁ = 53-57°C) sont mélangés avec 7,88 g d'huile de tournesol du commerce et 47,25 g de terpinéol (Sigma-Aldrich). Le mélange est agité et chauffé à une température d'environ 80°C.
A l'aide d'une pompe péristaltique, ce mélange ternaire liquide (à une température comprise entre Tf₁ et 80°C) est introduit dans la solution aqueuse de copolymère HASE.

### Coacervation

6,44 g d'une solution de H₃PO₄ à 4 % sont ajoutés à la solution aqueuse de copolymère HASE à laquelle a été ajouté le mélange ternaire liquide. On obtient une dispersion de couleur blanche, dont le diamètre des particules D50% = 2,73 µm.

### Essai 3-2 : Préparation d'une dispersion de microparticules hors invention

### Préparation d'une solution aqueuse

7,5 g du copolymère HASE (polymérisé à 30,8 % dans l'eau), sont solubilisés dans 59,25 g d'eau en présence de 3,8 g de soude à 10 % par agitation dans un agitateur mécanique à une température de 40°C.
15,75 g de paraffine commercialisée par la société Sigma-Aldrich (Tf₁ = 53-57°C) sont mélangés avec 47,25 g de terpinéol (Sigma-Aldrich). Le mélange est agité et chauffé à une température d'environ 80°C.

A l'aide d'une pompe péristaltique, ce mélange ternaire liquide (à une température comprise entre Tf₁ et 80°C) est introduit dans la solution aqueuse de copolymère HASE.

### Coacervation

6,44 g d'une solution de H₃PO₄ à 4 % sont ajoutés à la solution aqueuse de copolymère HASE à laquelle a été ajouté le mélange ternaire liquide. On obtient des grumeaux dont le diamètre D50% = 29,7 µm.

## Revendications

1. Microparticules à enveloppe polymérique, comprenant, par rapport au poids total des microparticules :
a. de 1 à 20 % en poids d'au moins un copolymère acrylique de type HASE comprenant :
- au moins un monomère anionique présentant une fonction vinylique polymérisable et un groupement carboxyle ;
- au moins un monomère hydrophobe non ionique présentant une fonction vinylique polymérisable ; et
- au moins un macromonomère associatif oxyalkylé présentant une fonction vinylique polymérisable et une chaîne hydrocarbonée hydrophobe ;
b. de 4 à 95 % en poids d'au moins un matériau à changement de phase solide-liquide, présentant une température de transition de phase Tf₁ variant de 35°C à 90°C, choisi parmi les cires d'origine naturelle, les cires d'origine synthétique ou leurs mélanges ;
c. de 4 à 95 % en poids d'au moins un matériau à changement de phase solide-liquide, présentant une température de transition de phase Tf₂ inférieure ou égale à 30°C, par exemple inférieure ou égale à 20°C, choisi dans le groupe consistant en les huiles végétales, les alcools gras, les acides gras et leurs mélanges ; et
d. éventuellement de 4 à 95 % en poids d'un agent actif sélectionné dans le groupe consistant en les molécules odorantes, les arômes, les opacifiants, les agents hydratants, les agents adoucissants, les agents rafraîchissants, les colorants, les plastifiants, les agents amincissants, les principes actifs pharmaceutiques, les encres, les pigments, les principes actifs agrochimiques, les herbicides, les antiseptiques, les détergents, les enzymes, les anti-mousses, les agents de blanchiment, les azurants optiques, les biocides, les agents anti-UV, les agents anti-oxydants, les agents anti-corrosion, les fongicides et les agents antibactériens.

2. Microparticules selon la revendication 1, selon lesquelles ledit matériau choisi parmi les cires d'origine naturelle, les cires d'origine synthétique ou leurs mélanges, présente une température de transition de phase Tf₁ variant de 35 à 80°C, avantageusement de 35 à 70°C.

3. Microparticules selon l'une des revendications précédentes, selon lesquelles ledit copolymère acrylique de type HASE comprend, par rapport au poids total dudit copolymère :
i. de 20 % à 65 % en poids d'au moins un monomère anionique présentant une fonction vinylique polymérisable et un groupement carboxyle ;
ii. de 35 % à 75 % en poids d'au moins un monomère hydrophobe non ionique présentant une fonction vinylique polymérisable ; et
iii. de 0,5 % à 15 % en poids d'au moins un macromonomère associatif oxyalkylé présentant une fonction vinylique polymérisable et présentant une chaîne hydrocarbonée hydrophobe.

4. Microparticules selon l'une des revendications précédentes, dans lesquelles ledit au moins un macromonomère iii. associatif oxyalkylé dudit copolymère acrylique de type HASE présente une formule (I) :
(I) R - A - R'
dans laquelle :
- A représente une chaîne polymérique constituée de :
- m motifs d'oxyde d'alkylène de formule -CH₂CHR₁O- avec R₁ représentant un groupement alkyle comprenant de 1 à 4 carbones, et m variant de 0 à 150,
- p motifs d'oxyde d'alkylène de formule -CH₂CHR₂O- avec R₂ représentant un groupement alkyle comprenant de 1 à 4 carbones, et p variant de 0 à 150,
- n motifs d'oxyde d'éthylène avec n variant de 0 à 150,
dans laquelle m+n+p >4 et dans laquelle les motifs d'oxyde d'alkylène de formule -CH₂CHR₁O-, les motifs d'oxyde d'alkylène de formule -CH₂CHR₂O- et les motifs d'oxyde d'éthylène sont en bloc, alternés ou statistiques ;
- R représente un radical contenant une fonction insaturée polymérisable, appartenant au groupe des esters acrylique, méthacrylique, maléique, itaconique, ou crotonique ; et
- R' représente une chaîne hydrocarbonée linéaire, branchée ou ramifiée comprenant de 6 à 40 atomes de carbone ou un groupement cycloalkyle ou aryle substitué, ou non substitué, comprenant de 6 à 100 atomes de carbone.

5. Microparticules selon la revendication 4, dans lesquelles ledit macromonomère iii. associatif oxyalkylé de formule (I) est tel que :
- m et p représentent respectivement 0,
- n varie de 15 à 150,
- R représente un radical contenant une fonction insaturée polymérisable appartenant au groupe esters acrylique, méthacrylique, maléique, itaconique, ou crotonique ; et
- R' représente une chaîne hydrocarbonée linéaire comprenant de 8 à 22 atomes de carbone ou une chaîne alkyle branchée ou ramifiée comprenant de 12 à 20 atomes de carbone.

6. Dispersion aqueuse comprenant des microparticules selon l'une des revendications précédentes.

7. Utilisation de microparticules selon les revendications 1 à 5 ou de dispersions aqueuses de microparticules selon la revendication 6, pour l'hydrophobisation des textiles.

8. Utilisation de microparticules selon les revendications 1 à 5 ou de dispersions aqueuses de microparticules selon la revendication 6, pour libérer un agent actif en réponse à un changement de pH, un changement de température et/ou à des frictions.

## Patentansprüche

1. Mikropartikel mit Polymerhülle, die, bezogen auf das Gesamtgewicht der Mikropartikel, Folgendes enthalten:
a. 1 bis 20 Gew.-% mindestens eines Acrylcopolymers des Typs HASE, umfassend:
- mindestens einen anionischen Monomer mit einer polymerisierbaren funktionellen Vinylgruppe und einer Carboxylgruppe;
- mindestens einen nicht-ionischen hydrophoben Monomer mit einer polymerisierbaren funktionellen Vinylgruppe; und
- mindestens einen oxyalkylierten assoziativen Makromonomer mit einer polymerisierbaren funktionellen Vinylgruppe und einer hydrophoben Kohlenwasserstoffkette;
b. 4 bis 95 Gew.-% mindestens eines Materials mit einem Fest-Flüssig-Phasenübergang, mit einer variablen Phasenübergangstemperatur Tf₁ zwischen 35 °C und 90 °C, das aus Wachsen natürlichen Ursprungs, Wachsen synthetischem Ursprungs oder deren Mischungen ausgewählt ist;
c. 4 bis 95 Gew.-% mindestens eines Materials mit einem Fest-Flüssig-Phasenübergang, mit einer Phasenübergangstemperatur Tf₂ von unter oder gleich 30 °C, beispielsweise von unter oder gleich 20 °C, das aus der Gruppe von pflanzlichen Ölen, Fettalkoholen, Fettsäuren und deren Mischungen ausgewählt ist; und
d. 4 bis 95 Gew.-% eines Wirkstoffs, ausgewählt aus der Gruppe bestehend aus Geruchsmolekülen, Aromastoffen, Trübungsmitteln, Befeuchtungsmitteln, Weichmachern, Erfrischungsmitteln, Farbstoffen, Plastizierern, Schlankheitsmitteln, pharmazeutischen Wirkstoffen, Druckfarben, Pigmenten, agrochemischen Wirkstoffen, Herbiziden, Antiseptika, Detergienzien, Enzymen, Entschäumungsmitteln, Bleichmitteln, optischen Authellern, Bioziden, UV-Schutzmitteln, Antioxidationsmitteln, Korrosionsschutzmitteln, Fungiziden und antibakteriellen Mitteln.

2. Mikropartikel nach Anspruch 1, wobei dieses Material, ausgewählt aus Wachsen natürlichen Ursprungs, Wachsen synthetischen Ursprungs oder deren Mischungen, eine variable Phasenübergangstemperatur Tf₁ zwischen 35 und 80 °C, vorzugsweise zwischen 35 und 70 °C, aufweist.

3. Mikropartikel nach einem der vorstehenden Ansprüche, wobei dieses Acrylcopolymer des Typs HASE, bezogen auf das Gesamtgewicht des Copolymers, Folgendes umfasst:
i. 20 bis 65 Gew.-% mindestens eines anionischen Monomers mit einer polymerisierbaren funktionellen Vinylgruppe und einer Carboxylgruppe;
ii. 35 bis 75 Gew.-% mindestens eines nicht-ionischen hydrophoben Monomers mit einer polymerisierbaren funktionellen Vinylgruppe; und
iii. 0,5 bis 15 Gew.-% mindestens eines oxyalkylierten assoziativen Makromonomers mit einer polymerisierbaren funktionellen Vinylgruppe und einer hydrophoben Kohlenwasserstoffkette.

4. Mikropartikel nach einem der vorstehenden Ansprüche, bei denen mindestens ein oxyalkyliertes assoziatives Makromonomer iii. dieses Acrylcopolymers des Typs HASE eine Formel (I) aufweist:
(I) R - A - R'
wobei:
- A eine Polymerkette darstellt, bestehend aus:
- m Alkylenoxideinheiten mit der Formel -CH₂CHR₁O-, wobei R₁ eine Alkylgruppe mit 1 bis 4 Kohlenstoffatomen ist und m zwischen 0 und 150 variiert,
- p Alkylenoxideinheiten mit der Formel -CH₂CHR₂O-, wobei R₂ eine Alkylgruppe mit 1 bis 4 Kohlenstoffatomen ist und p zwischen 0 und 150 variiert,
- n Ethylenoxideinheiten, wobei n zwischen 0 und 150 variiert,
bei der m+n+p >4 und bei der die Alkylenoxideinheiten mit der Formel -CH₂CHR₁O-, die Alkylenoxideinheiten mit der Formel -CH₂CHR₂O- und die Ethylenoxideinheiten als Block, alternierend oder statistisch angeordnet sind;
- R ein Radikal mit einer polymerisierbaren ungesättigten Funktion aus der Gruppe der Acryl-, Methacryl-, Malein-, Itacon- oder Krotonester ist; und
- R' eine lineare, verzweigte oder abgezweigte Kohlenwasserstoffkette mit 6 bis 40 Kohlenstoffatomen oder eine substituierte bzw. nicht substituierte Cycloalkyl- oder Arylgruppe mit 6 bis 100 Kohlenstoffatomen ist.

5. Mikropartikel nach Anspruch 4, wobei dieses oxyalkylierte assoziative Makromonomer iii. mit der Formel (I) wie folgt definiert ist:
- m und p sind jeweils gleich 0,
- n variiert zwischen 15 und 150,
- R ist ein Radikal mit einer polymerisierbaren ungesättigten Funktion aus der Gruppe der Acryl-, Methacryl-, Malein-, Itacon- oder Krotonester; und
- R' ist eine lineare Kohlenwasserkette mit 8 bis 22 Kohlenstoffatomen oder eine abgezweigte bzw. verzweigte Alkylkette mit 12 bis 20 Kohlenstoffatomen.

6. Wässrige Dispersion mit Mikropartikeln nach einem der vorstehenden Ansprüche.

7. Verwendung von Mikropartikeln nach Anspruch 1 bis 5 oder von wässrigen Dispersionen mit Mikropartikeln nach Anspruch 6 zur Hydrophobierung von Textilien.

8. Verwendung von Mikropartikeln nach Anspruch 1 bis 5 oder von wässrigen Dispersionen mit Mikropartikeln nach Anspruch 6, um einen Wirkstoff als Reaktion auf eine pH-Wertveränderung, einen Temperaturwechsel und/oder auf Reibung freizusetzen.

## Claims

1. Microparticles having a polymeric shell, comprising, based on the total weight of the microparticles:
a. from 1 to 20% by weight of at least one acrylic copolymer of HASE type comprising:
- at least one anionic monomer having a polymerizable vinyl group and a carboxyl group;
- at least one nonionic hydrophobic monomer having a polymerizable vinyl group; and
- at least one alkoxylated associative macromonomer having a polymerizable vinyl group and a hydrophobic hydrocarbon chain;
b. from 4% to 95% by weight of at least one solid/liquid phase change material, having a phase transition temperature Tf₁ varying from 35°C to 90°C, chosen from waxes of natural or synthetic origin or their mixtures ;
c. from 4% to 95% by weight of at least one solid/liquid phase change material, having a phase transition temperature Tf₂ of less than or equal to 30°C, for example of less than or equal to 20°C, chosen in the group of vegetable oils, fatty alcohols, fatty acids and their mixtures ; and
d. optionally from 4 to 95% by weight of an active agent selected from the group consisting of fragrance molecules, flavorings, opacifying agents, hydrating agents, softening agents, refreshing agents, dyes, plasticizers, slimming agents, pharmaceutical active ingredients, inks, pigments, agrochemical active ingredients, herbicides, antiseptics, detergents, enzymes, antifoaming agents, bleaching agents, optical brighteners, biocides, UV stabilizers, antioxidants, corrosion inhibitors, fungicides and antibacterial agents.

2. Microparticles as claimed in claim 1, according to which said material is chosen from waxes of natural origin, waxes of synthetic origin or their mixtures, having a phase transition temperature Tf₁ varying from 35°C to 80°C, advantageously from 35 to 70°C.

3. Microparticles as claimed in one of the preceding claims, according to which said acrylic copolymer of HASE type comprises, based on the total weight of said copolymer:
i. from 20% to 65% by weight of at least one anionic monomer having a polymerizable vinyl group and a carboxyl group;
ii. from 35% to 75% by weight of at least one nonionic hydrophobic monomer having a polymerizable vinyl group; and
iii. from 0.5% to 15% by weight of at least one alkoxylated associative macromonomer having a polymerizable vinyl group and having a hydrophobic hydrocarbon chain.

4. Microparticles as claimed in one of the preceding claims, in which said at least one alkoxylated associative macromonomer iii. of said acrylic copolymer of HASE type has a formula (I):
(I) R - A - R'
in which:
- A represents a polymer chain consisting of:
- m alkylene oxide units of formula -CH₂CHR₁O- with R₁ representing an alkyl group comprising from 1 to 4 carbons, and m varying from 0 to 150,
- p alkylene oxide units of formula -CH₂CHR₂O- with R₂ representing an alkyl group comprising from 1 to 4 carbons, and p varying from 0 to 150,
- n ethylene oxide units with n varying from 0 to 150,
in which m+n+p >4 and in which the alkylene oxide units of formula -CH₂CHR₁O-, the alkylene oxide units of formula -CH₂CHR₂O- and the ethylene oxide units are in blocks, alternating or random;
- R represents a radical containing a polymerizable unsaturated group belonging to the group of acrylic, methacrylic, maleic, itaconic or crotonic esters; and
- R' represents a straight or branched hydrocarbon chain comprising from 6 to 40 carbon atoms or a substituted or unsubstituted cycloalkyl or aryl group comprising from 6 to 100 carbon atoms.

5. Microparticles as claimed in claim 4, in which said alkoxylated associative macromonomer iii. of formula (I) is such that:
- m and p respectively represent 0,
- n varies from 15 to 150,
- R represents a radical containing a polymerizable unsaturated group belonging to the group of acrylic, methacrylic, maleic, itaconic or crotonic esters; and
- R' represents a straight hydrocarbon chain comprising from 8 to 22 carbon atoms or a branched alkyl chain comprising from 12 to 20 carbon atoms.

6. Aqueous dispersion comprising microparticles as claimed in one of the previous claims.

7. Use of microparticles as claimed in claims 1 to 5 or of aqueous dispersions of microparticles as claimed in claim 6, for rendering textiles hydrophobic.

8. Use of microparticles as claimed claims 1 to 5 or of aqueous dispersions of microparticles as claimed in claim 6, for releasing an active agent in response to a change in pH, a change in temperature and/or to frictions.
